# EUROPEAN PATENT SPECIFICATION

(11) **EP 4 348 040 B1**
(45) Date of publication and mention of the grant of the patent: **05.03.2025**
(21) Application number: 22733216.0
(22) Date of filing: 30.05.2022
(51) Int. Cl.: F03D 3/00, F03D 3/04, F03D 9/45

(54) **WIND ENERGY EXPLOITATION SYSTEM FOR THE BUILDING SECTOR**
WINDENERGIEGEWINNUNGSSYSTEM FÜR DEN BAUBEREICH
SYSTÈME D'EXPLOITATION D'ÉNERGIE ÉOLIENNE DESTINÉ AU SECTEUR DU BÂTIMENT

(30) Priority: 03.06.2021 IT 202100014408
(43) Date of publication of application: 10.04.2024
(73) Proprietor: Nexty Arte S.r.l., 30123 Venezia (IT)
(72) Inventor: DE FECONDO, Diego, 30123 Venezia (IT)
(74) Representative: Bruni, Giovanni
(86) International application number: PCT/IB2022/055046
(87) International publication number: WO 2022/254308

(56) References cited:
- CA-A1- 3 016 114
- US-A1- 2010 247 302
- US-A1- 2019 024 633

## Description

### Technical Field of the Invention

The present invention relates to the energy efficiency of buildings and, in particular, addresses the problem of exploiting the generation of electricity from wind sources in the building sector.

### Prior Art

The possibility of exploiting wind energy for the generation of electricity is well known, and, from the technical point of view, it does not present significant conceptual difficulties: it is a question of intercepting the force of the wind to put in rotation some suitable blades which, in turn, transfer their rotation to the rotor of an electric generator (i.e., an electric motor used inversely).

The technical problems related to the exploitation of wind energy, therefore, do not concern so much the principle of operation, but rather the geometric conformation of the system that must intercept the wind.

The known art proposes a huge variety of systems of different sizes, and blades shaped in many ways, they are also proposed some solutions that differ in the orientation of the rotation axis, which can be horizontal or vertical.

Horizontal axis systems need to be oriented also according to the wind direction; this need represents a further element of complexity, but generally these systems are the most efficient for the same section that intercepts the wind.

Vertical axis systems, on the other hand, do not need to orient themselves to take in the wind, but generally have a lower efficiency, as rotation necessarily implies that some parts move against the wind, and efficiency is optimized by working on the shape of the blades. which must have a much more aerodynamic side than the other.

In any case, it can be said that the known art already offers many systems with a high level of technological maturity, so much so that the wind source is generally considered an advantageous energy source, and it is one of the most exploited alternative energy sources in plants in operation.

Despite the aforementioned technological maturity, however, research is still very active in order to improve the efficiency of wind systems and to offer solutions to various technical problems, which are still significant and limit the spread of these systems.

In order to offer a very concise overview of the various problems that are still open, wind systems can be divided into two macro categories: the so-called wind farms, i.e., real power generation plants, generally located in particularly windy areas, and the so-called micro-wind systems, designed for small private productions, intended for local consumption. Intermediate cases are obviously also possible, but it is not necessary to go further in depth at this time, to summarize the still open problems, regarding the production of energy from wind sources.

All systems are designed to have their best performance in certain wind conditions, and they are generally operated when there is wind within certain speed ranges.

In fact, too weak winds do not even have the strength to start the rotation of the rotor of the generating machine itself, and to accelerate it until it rotates with an angular speed such that it can work within a working range of acceptable efficiency.

At the opposite extreme, too strong winds can excessively stress the mechanical structure of the blades that intercept the wind, risking breaking them.

Through gears that implement change ratios of the angular speed between the rotation of the blades and the rotation of the rotor, or with the introduction of dissipating brakes, it is possible to manage quite wide wind speed ranges, but there is always a physical limit to the force of the wind that can be managed, and beyond this limit it is necessary to fold the blades so that they are not exposed to the force of the wind, to avoid their damage.

In large plants, installed in wind farms, mills with very large blades are generally used, which move very powerful generators. For the use of these big generation machines, evidently, a minimum wind strength, sufficient for their start, is required, moreover very large blades are subjected to enormous mechanical stress when operating in very strong wind conditions.

It is also for these reasons that the choice of the areas in which to build wind farms is a choice to be made very carefully, choosing areas that are truly suited to the purpose, and characterized by fairly predictable wind conditions and tendentially stable with respect to the project conditions.

Other problems related to wind farms concern, in general, factors of landscape and environmental impact.

In addition to changing entire landscapes in a very evident way, large wind farms also alter some ecosystems due to their noise and the large number of birds and bats that die as a result of accidents caused by these systems.

Although quantitatively (and qualitatively) different, the problems highlighted above are also encountered in the context of so-called micro-wind plants. In particular, even micro-wind plants have an aesthetic impact that is difficult to integrate, and the minimum and maximum wind intensities within which the best production efficiency is found are often reduced to quite limited intervals; in fact, even micro-wind plants require a minimum intensity of wind (even if only to be started) and must be protected from too strong winds.

The known art offers many solutions characterized by attractive designs and suitable to be inserted in the architectural and structural context of various types of buildings. In general, these are solutions that aim at the aesthetic enhancement of the system itself, obviously not being able to hide systems of such large dimensions that, in addition, they must be positioned in such a way as to be exposed to the wind, and therefore clearly visible.

Often, but not necessarily, micro-wind systems have a structure that provides a vertical rotation axis, and it is certainly possible to design them in such a way that they have an acceptable appearance to be installed in an existing architectural context. Nevertheless, the size and positioning constraints of micro-wind systems objectively represent one of the limits to the widespread exploitation of this energy source in the building context. In many cases, other forms of alternative generation are preferred (for example through photovoltaic panels) even only for their greater architectural integrability.

Since the size of these systems is actually one of the most felt problems, the research to obtain very efficient systems is particularly important since, for the same power generated, it is evident that the most efficient systems can be smaller. However, it is now clear that the size reductions that can be obtained by increasing the efficiency of the systems will not be such as to have a drastic impact (i.e., creating a system with significantly smaller dimensions) on the problem of overall dimensions: a problem that is therefore destined to remain as such.

Before addressing the problem of the architectural integrability of micro-wind systems, and in order to complete the overview of the known art, it should be noted that ways of producing energy from wind sources other than those that exploit the kinetic energy of air masses, in order to move blades, are also being studied.

In this regard, we point out US2020373855 A1 ["Electronic Wind Powered generator" - R.L.Epstein [US] et al. - November 26, 2020]; which exploits the fact that a flow of air can charge electrostatically, by rubbing, the conductors and it can transport ions. By appropriately designing grids, and exposing them to wind flows, it is therefore possible to create potential differences that can be exploited to generate electricity. This last solution is still in the prototype phase and certainly needs improvements to obtain good efficiencies, however it has some advantages related to the fact that it does not have moving mechanical parts.

Like all solutions that intend to exploit the kinetic energy of the wind, however, even the technologies based on the above-mentioned electrostatic principles always require a lot of air to be intercepted, and therefore also these systems must be large and positioned in such a way as to intercept large amount of air. Moreover, these technologies also require fairly high air flows, necessary to trigger electrostatic phenomena (essentially by rubbing between the air and the conductor).

Ultimately, it would seem that, although it is possible to improve the efficiency of wind generation systems, their application, to create micro-wind systems to be integrated into buildings, will necessarily have to face the problem of difficult architectural integration.

After all, wind energy is stored in the form of kinetic energy in large masses of air, and we cannot expect to harness this energy, to transform it into electricity, without intercepting large masses of air.

Another document representing the prior art is US 2010/247302 A1.

### Purpose and summary of the invention

The main purpose of the present invention is to indicate some essential characteristics of a micro-wind generation system suitable for architectural integration in new buildings conceived according to the logic of energy efficiency, so as not to be visually evident as the systems according to the known art.

Another very important purpose of the invention is to indicate some characteristics of said micro-wind generation system that make it particularly efficient, even with respect to variable wind speeds.

Other collateral purposes are then to be sought in the fact that the present invention proposes to find application in the context of intelligent buildings (i.e., buildings characterized by high intensity of computerized systems) in which aspects of energy efficiency and comfort are treated in a particular way.

The objectives indicated are achievable through a micro-wind electricity generation system integrated into a building in which its external surfaces constitute the element that intercepts the flow of the wind: in particular external walls or pitches of the roof. The system according to the invention therefore exploits the wind intercepted by at least one of its external surfaces, and it is also characterized by some additional essential characteristics listed below.

Said at least one external surface that constitutes the element that intercepts the flow of the wind is characterized by the fact that it has a plurality of holes, or slits, or openings in general, through which the wind that hits them can enter.

These holes, or said slits, constitute the entrance to special channeling pipes, internally shaped so that the air is forced to flow only in the incoming direction. A typical example of conduits shaped in this way is given by the so-called Tesla valves.

By connecting the holes in the walls to these ducts, the wind that hits the wall enters the ducts but is substantially prevented from escaping from the same holes, or slits, that are present in a widespread way in the wall, so that the air is forced to exits from the other end of the ducts.

A further essential feature is given by the fact that at least one rotating element with wind blades is positioned at the outlet of said ducts; although, likely, there will be more than one of these rotating elements.

Said rotating elements are positioned so that the air coming out of said ducts invests wind blades thus putting them in rotation, being part of an electric generator that transforms part of the mechanical energy transmitted to said rotating elements into electric energy: in other words, said rotating elements are the rotor of an electric generator.

The main advantage of the present invention consists in the fact that a micro-wind system which has the essential characteristics indicated in the teachings of the present invention, satisfies all the main requirements for which it was conceived.

In particular, the main requirement of architectural integration is automatically guaranteed; in fact, the surface hit by the wind is that of the building walls, or the slopes of the roof, and therefore it is not necessary to prepare additional structures (from an architectural point of view) to harness the force of the wind.

The other components of the system, on the other hand, are hidden: the channeling pipes are immersed in the walls, or under the pitches of a roof, while the rotating elements can be easily hidden, positioning them in specially created compartments where the pipes are made to converge.

Privileged positions where to place the generation machines can be obtained in areas (even inaccessible) of the attic, or underground rooms can be created near the base of the building. In the first case, a system of upward channeling pipes must be prepared, in the second case the system of channeling pipes must be descending.

### Brief Description of the Drawings

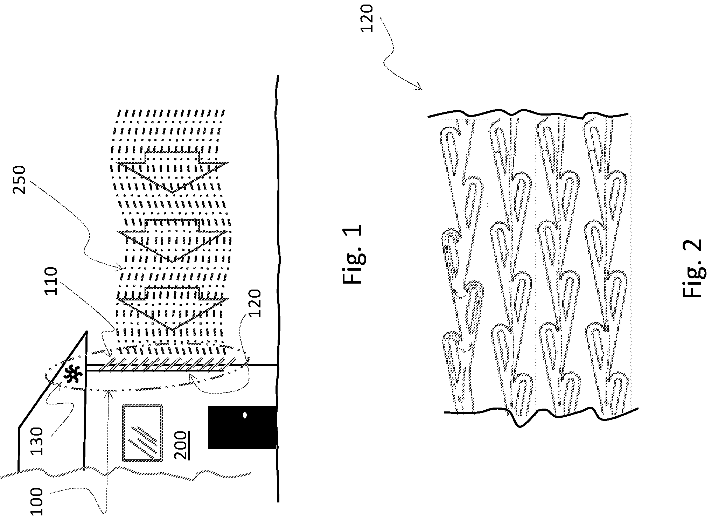

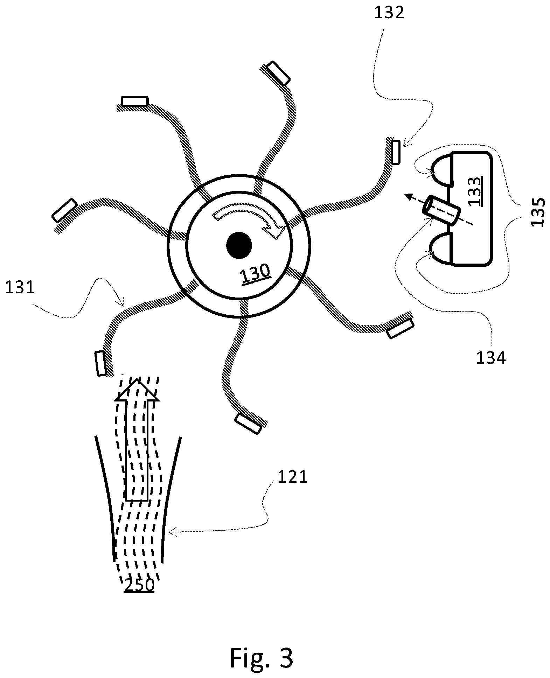

This invention also has further advantages, which materialize into beneficial effects with respect to all the objectives of the invention, and which will become more evident from the following description, from some examples of practical embodiments which illustrate further details, from the attached claims which form an integral part of the present description, and from the attached figures in which:
✔ Figure 1 schematically shows a building equipped with a micro-wind system according to the invention, which has an external wall hit by a windy flow;
✔ Figure 2 shows, in a schematic and simplified way, a possible conformation of a detail of the wind channeling system, in a wall equipped with a micro-wind system according to the invention;
✔ Figure 3 represents an example of a subsystem to aid the rotation of the rotor of an electric generator comprised in the micro-wind system according to the invention.

### Detailed Description

The micro-wind generation system according to the invention has its main prerogative in the fact that it is structurally integrated into a building, which in Figure 1 is indicated with the number 200.

The implementation example shown in Figure 1 refers to a system that uses a wall of the building 200, which is well exposed to the wind. However, any surface that is well exposed to the winds present in the area can be used to implement the invention, for example, the pitched roofs.

The fundamental elements of the micro-wind generation system according to the invention are represented in Figure 1 within the dotted line indicated with the number 100: number that also indicates the micro-wind generation system as a whole. In general, all the elements that make up said micro-wind system 100 are then indicated with numbers in which the first digit is 1.

If a building is tall enough (compared to neighboring buildings), or if it is located in an area quite separate from other buildings, its walls, in the presence of windy climate, are normally hit by the wind, as shown in Figure 1, where the wind is indicated with the number 250. Breaking into the walls, the wind dissipates a large part of its kinetic energy: this kinetic energy is therefore lost following this dissipation.

The invention is based on the intuition that the kinetic energy of the wind 250 that crashes on the walls of the buildings 200 can be recovered at least in part. The first problem that must be faced consists in capturing the wind that hits the walls. The problem is solved very simply: instead of opposing a smooth wall, that opposes to the wind, a surface covering of the wall is created which has openings that allow air to enter the wall itself. In Figure 1, such surface cover is indicated with the number 110 and consists of a series of horizontal blades, arranged parallel, which act as a deflector of the air, deflecting it upwards, so that it remains trapped under the blades located higher up.

The wind 250 which filters through the surface cover 110 still maintains a horizontal component which breaks on the underlying surface, which, in Figure 1, is indicated with the number 120.

Evidently, the underlying surface 120 cannot be perforated, since the wall of the building 200 must also perform its main function of protecting the internal environments.

The solution proposed in the context of the present invention provides for the expedient of conforming said underlying surface 120 with grooves, so that the air that breaks on it does not disperse indifferently in various directions, but is conveyed in such a way as to go along a prevailing direction.

In the form of implementation presented in Figure 1, the air is channeled upwards, also favored, in addition to the conformation of the underlying wall, by the deviation component induced by the blades which constitute the surface cover 110 and which act, as mentioned, by air deflectors.

The wind 250 which hits the external wall of building 200, due to the combined effect of the surface cover 110 (and the deflecting blades that compose it) and the conformation of the underlying wall 120, is deflected towards the roof of the building 200.

Certainly, the deviations and channeling described still provide a non-negligible dissipation of the kinetic energy of the wind 250, however, if the shaping is well done, the wind 250 goes out towards the roof of the house still maintaining a significant amount of kinetic energy.

The channeled wind 250 has two extremely interesting characteristics. In fact, although slowed down due to the channeling operations, the amount of wind 250 that is exploited is still made up of a lot of air, as the walls of buildings are generally large enough, and generally larger than the surfaces useful for harnessing the force of the wind that can be offered by a generic micro-wind system according to the known art, suitable to be installed in a building.

The second characteristic concerns the concentration of the air flow out of the paths in which it is channeled, which is very favorable for its subsequent exploitation. The air flow, in fact, is expelled in a well-defined area, which, in the example of Figure 1, is located in a zone of the attic of building 200, and where a generation machine can be optimally positioned. In Figure 1, the electric power generation machine is indicated with the number 130 and, as can be seen, it can be positioned in an unusable area (i.e., in a space that is normally wasted) of the attic.

Precisely thanks to the fact that said air flow is limited and concentrated near the outlets of the ducts that are formed between the surface cover 110 and the underlying surface 120, the wind-blades with which said generation machine 130 is equipped can be easily positioned to take the airflow as efficiently as possible, for example, preventing that some parts of the rotating element have to move against the wind.

Generating machine 130 is generally quite small: in fact, since the air flow is very concentrated, it does not require very large blades. The relatively small dimensions therefore allow these generic machines to be positioned with great flexibility. In addition to the positioning at the top, as in the example of Figure 1, other positions are therefore possible: for example, at the bottom, near the base of the building, where it is possible to prepare compartments in which to install one or more generic machines 130; rooms that can also be built underground or partially underground, so as to almost completely eliminate the aesthetic impact.

In very tall buildings, on the other hand, the objective of not resorting to excessively long ducts could be favored, to avoid excessive dissipation of the kinetic energy of the air masses along the ducts, and in such cases it is possible to set up generation points at intermediate heights of the external walls, obtaining the housing compartment for the generating machines 130 so that it is accessible from the outside, or from the inside of the building, in this second case effectively eliminating any aesthetic impact.

In other forms of implementation, the wind flows 250 captured by the walls of the building could be channeled horizontally, and the generating machines 130 should, in this case, be positioned along a lateral edge of the external wall. This last form of implementation appears particularly interesting in all those cases in which the prevailing direction of the winds affecting a particular area is known; and this direction is quite oblique with respect to the plane offered by the wall. It is certainly a good practice to go along with the direction of the wind, trying to reduce deviations and changes in direction as much as possible in channeling operations. Therefore, it is certainly advantageous to exploit any component of the wind direction parallel to the orientation of the wall, by channeling the wind 250 itself horizontally, when it hits the wall obliquely.

The case of the roof is then particularly favorable, because being typically inclined it offers an impact surface to the wind wherein the need for deviation of the flow is more limited.

In any case, the teachings of the present invention disregard the numerous variations that allow it to be adapted to the various wind conditions of the individual locations, by choosing, each time, the external surfaces of the building that appear most suitable for intercepting the wind.

The fundamental elements for trapping and channeling the wind that hits an external surface of a building (a perimeter wall or the roof), as mentioned, are the surface cover 110, which has the essential function of conveying the wind inside the wall, and to induce a first deviation, and the underlying surface 120, which has the function of conveying the air that has entered the wall along a single direction.

Various forms of implementation are possible to create said external cover 110: it is sufficient that said cover has holes or openings in general, which allow the air to penetrate, and that the shape of the surface on which the wind blows is shaped in such a way to deflect the wind itself towards said openings. However, the form of implementation by means of longitudinal blades, arranged parallel, of the type indicated in Figure 1, is certainly a very efficient form of implementation, as it is not bulky, stylistically homogeneous, and easy to manufacture.

Also with regard to said underlying surface 120 various conformations can be conceived, but, also in this case, it is possible to identify a particularly effective conformation, and of simple construction. Figure 2 shows the shaping obtained on a piece of an underlying surface 120, in which the presence of side-by-side grooves can be seen. These grooves have the shape of the pipes of the so-called Tesla valves, conceived by the Serbian engineer Nikola Tesla over a century ago. The pipelines of Tesla valves have the property of being crossed by fluids and gases in a very different way in the two directions. In one direction (the one from right to left in the representation of Figure 2) the flow occurs in an optimal way, while in the opposite direction (the one from left to right in the representation of Figure 2) the flow continuously separates several streams and rejoins forming vortices which, in fact, interrupt the flow itself.

Beyond the effectiveness of this conformation, which allows you to create a sort of valve without moving elements, the further advantage of this conformation is that it can be easily obtained on panels even of low thickness to be used to cover a wall of a building 200 so as to obtain an underlying surface 120 suitable for implementing the present invention. Obviously, it is necessary to correctly lay these panels in order to orient the pipes in the direction in which it is desired to channel the wind 250.

In Figure 3 a form of implementation of the generating machine 130 is presented in more detail, highlighting how the general characteristics of the micro-wind system 100 according to the invention lend themselves to adopting very advantageously further technical measures aimed at increasing the efficiency of the micro-wind generation 100 as a whole.

One of the technical problems highlighted in all wind generation systems, and also in micro-wind systems, is the inadequacy of the same to exploit even very low wind powers, in fact, In order to make the electric generators work at maximum efficiency, it would be necessary to keep the angular speed of rotation of the rotor within certain fairly limited ranges. Furthermore, even the very start of the rotation requires a starting power that is not always available when the wind is very light.

At this point, it is observed that, in the specific case of the present invention, the problem of managing too strong air flows is less felt, as the wind that arrives on the blades of the generating machine 130 is slowed down by the deviations due to its channeling. On the other hand, it is very important to manage low winds, precisely because the force of the wind that reaches the generating machine 130 is often a fairly weak wind.

The physical arrangement of the elements that make up the micro-wind system 100 according to the invention makes it possible to offer a solution to this technical problem, as can be easily explained with the aid of Figure 3.

The number 121 indicates the outlet of a pipeline inside which the wind 250, which hits an external wall of a building, is channeled. As already repeatedly explained, the flow of wind 250 is blown out of the ducts in a concentrated manner so as to invest, substantially one at a time, the individual blades of the generating machine 130. In Figure 3, the number 131 indicates one of the blades which is in the position to be hit by the flow of wind 250.

A first advantage is given by the fact that all the available flow 250 is blown onto the blade 131 which is in the most suitable position for transforming the thrust of the wind into a torque which rotates the rotor of the generating machine 130, while the other blades which are in an unsuitable position to take advantage of the wind thrust, are not affected by the air flow.

A second advantage is given by the fact that it is possible to equip the generating machine 130 with an additional rotation assistance subsystem, indicated in Figure 3 with the number 133. Said rotation assistance subsystem 133 performs the important function of generating, if necessary, a further rotation torque to the rotor of the generating machine 130 in order to maintain the rotation speed at the level of maximum efficiency, or to supply a torque to start the rotation when the force of the wind 250 is not sufficient.

The effectiveness of this rotation assistance subsystem133 is given by the fact that, in many cases, the cost in terms of energy consumption of the generation of said further aid rotation torque is lower than the increase in energy produced by the generating machine 133. In all such cases, therefore, it is advantageous to activate said rotation assistance subsystem 133.

Figure 3 shows a particularly interesting form of implementation of said rotation assistance subsystem 133, because the transmission of the rotation assistance torque occurs without transmissions by contact and can be activated in a pulsating manner with excellent precision and flexibility.

Number 132 indicates small elements of ferromagnetic material positioned on the ends of the blades 131. In Figure 3, these elements 132 made of ferromagnetic material are placed on the side opposite to the side where the blade takes the wind, in order to highlight the side from which the blade must be pulled to induce rotation (while obviously the wind must push the blade, and therefore blows on the other side). Said rotation assistance subsystem 133 also includes an electromagnet, indicated in Figure 3 with the number 134 which can be activated to attract the ferromagnetic element 132 placed on an approaching blade, thus exerting a force that pulls the blade, and therefore which impresses an angular acceleration component on the rotor of the generating machine 130. As soon as the element 132 overcomes said electromagnet 134, this is turned off as it would no longer generate a force of attraction useful for pulling the blade in the desired direction. The rotation assistance subsystem 133 (in the form of implementation presented in Figure 3) is completed by two sensors for the passage of the blade (for example two photocells), indicated in Figure 3 with the number 135. These passage sensors 135 are useful for to synchronize the switching on and off of the electromagnet 134, or also to carry out measurements of the angular speed of rotation of the rotor of the generating machine 130.

It is clear that the rotation assistance subsystem 133 shown in Figure 3 represents just one of the possible forms of implementation. What is relevant for the purposes of achieving the purposes for which the present invention has been conceived is that the particular location of the generating machine 130 makes it possible to use, in a simple way, various systems for assisting the rotation, which can operate at very low consumption, and which can make the generating machine 130 to operate in optimum efficiency regimes.

Among the advantages deriving from the particular location of the generating machine 130, as well as from its small size, there is also the possibility of exerting the force that produces the auxiliary rotation torque on the distal ends of the blades so as to exploit in an optimal way also the leverage effect. The known technique, in fact, already proposes wind generation systems in which production efficiency is optimized by intervening, when needed, with auxiliary rotation torques; however, in larger plants where the blades are directly exposed to natural wind, the auxiliary rotation torques cannot easily be exercised by acting on the distal ends of the blades, and, notwithstanding this disadvantage, the benefits in terms of increased production efficiency are still appreciable in many cases.

### Concluding Remarks

Ultimately, a micro-wind generation system 100 according to the teachings of the invention can be installed in a large number of buildings, satisfying the two main objectives for which it was designed.

In fact, it is a system that allows easy architectural integration with each building, as all that is visible is the surface coverage 110 of the walls, but there are no bulky or protruding elements that substantially modify the architectural lines of the building. Indeed, through the many variations in terms of colors and materials with which it is possible to create the cover surface 110 of the walls, it is even possible to play with great flexibility to devise particular aesthetic and stylistic solutions to be given to the building. Indeed, through the many variations in terms of colors and materials with which it is possible to create the cover surface 110 of the walls, it is even possible to play with great flexibility to devise particular aesthetic and stylistic solutions to be given to the building

Moreover, thanks to the flexible positionability of the generating machine 130, together with its generally quite small dimensions, it has been shown how it is possible to manage its operation always at optimal rotation speeds; thus, offering a very satisfactory response to the goal of creating a wind generation system suitable to operate even in the presence of fairly variable wind speeds.

The response offered by the invention to the problem of architectural integration, indirectly, also overshadows the need to exacerbate the production efficiency. In fact, the walls or roofs of buildings intercept large quantities of air, and this fact allows significant production levels to be reached precisely due to the large amount of moving air that can be exploited; unlike what happens by resorting to the use of systems according to the known art which, for reasons of encumbrance, must try to contain as much as possible the dimensions of the wind capture surfaces and, therefore, can increase production only through the research of the best transformation efficiency.

In addition to the main objectives, the present invention is absolutely consistent with the reference scenario in which it must be framed, that is, the scenario of intelligent buildings in which the issue of energy efficiency is also very important. In fact, the walls used for wind generation are actually ventilated walls, i.e., walls able to provide an optimal management of thermal insulation, breathability and moisture treatment.

In this regard, it is noted that the materials to be used both for the surface coverage 110, and for the panels with which the conformation of the underlying wall 120 is created, do not pose particular constraints for the purposes of the invention. What really matters is only their conformation, and therefore it is certainly allowed to implement the invention with materials with appropriate technological properties, thus creating real ventilated walls that can be designed to meet general insulation parameters (including acoustic).

Finally, it should also be noted that the invention, being by its very nature a system designed to have strong architectural integration, must necessarily be designed on a case-by-case basis. However, while allowing a wide flexibility of different configurations and aesthetic results, the invention lends itself to being proposed in highly prefabricated and modular forms. The wind generation system according to the invention can therefore also be defined as a product that can be industrialized and installed even in existing contexts, through restructuring interventions that do not necessarily have to be excessively invasive. Furthermore, despite the possibility of proposing the micro-wind generation system 100 according to the invention with industrial logics, i.e., as a largely predefined product, it is still a tailor-made system designed on a case-by-case basis, and it is therefore subject to the advantages (or disadvantages) of good (or bad) design. Among the most significant advantages that can be achieved through good design, but which are possible thanks to the other general characteristics of the system, there is the possibility of adjusting the sections of the wind channeling pipes. Depending on the space available and the type of wind typical of the place of installation, measures can be put in place to improve the efficiency of the system as a whole, while maximizing the energy of the wind that can be blown onto the wind-blades of the generation machine 130. An expedient, that can be adopted quite simply, for example, consists in acting on the sections of the ducts and on the conformation of their outlets: in fact, by arranging suitable section variations in the area corresponding to the outlet opening, it is possible to exploit the Venturi effect to facilitate the escape of air and the forced channeling of the wind 250.

In general, therefore, the present invention lends itself to numerous variants while maintaining the claimed prerogatives.

Possible further variants may be linked to the evolution of plants and systems that will affect the intelligent buildings of the future, in order to proceed towards an ever-greater integration of systems with different functions.

With reference to scenarios of this type, which to date may appear excessively complex, it is a question of exploiting elements of each system to the benefit of other systems as well, so that each element of each system can be subject to variations that allow it to be used for a plurality of functions.

Therefore, especially in the context of these evolutionary scenarios, the invention seems to lend itself to incorporating and supporting further development and improvement efforts, capable of improving the performance of the system described. Many further developments can certainly be made by man skilled in the art without thereby departing from the scope of the invention as it results from this description and the attached claims, which form an integral part of this description; or, if said developments are not included in the present description, they may be the subject of further patent applications associated with the present invention, or dependent on it.

## Claims

1. A micro-wind system for electricity generation (100) suitable for being integrated into a building (200) of which at least one of its external surfaces constitutes the element that intercepts the flow of the wind (250), being said micro-wind generation system wherein:
a. said at least one external surface that constitutes the element that intercepts the flow of the wind (250) has a plurality of holes, or slits, or openings in general, through which the wind (250) that hits it can enter, and
b. said holes, or said slits, or openings in general, constitute the entrance to special channeling ducts, internally shaped so that the air is forced to flow only in the incoming direction, so that the wind (250) which invests said at least one external surface enters said ducts, but it is substantially prevented from escaping from the same holes, or slits, or openings in general, which are present in said at least one external surface, and the air is forced to exit from the other end of said ducts; moreover:
c. at least one rotating element with wind blades (131) is positioned at the outlet of these ducts, and
d. said at least one rotating element is positioned so that the air coming out of said ducts invests said wind blades (131) thus putting in rotation said rotating element, and
e. said at least one rotating element is part of an electrical generator (130) which transforms part of the mechanical energy transmitted to said rotating element, being put in rotation, into electrical energy; and said least one external surface which constitutes the element that intercepts the flow of wind (250) is **characterized in that** it comprises:
i. a surface cover (110) on which there is said plurality of holes, or slits, or openings in general, through which the wind (250) can enter, and
ii. an underlying surface (120) shaped with grooves suited to convey the air that hits said underlying surface (120) along a prevailing direction and to avoid that the air disperses indifferently in various directions.

2. Micro-wind generation system (100) according to claim 1 wherein said underlying surface (120) has side-by-side grooves having the shape of the Tesla valve ducts.

3. Micro-wind generation system (100) according to claim 1 wherein said surface cover (110) includes a plurality of longitudinal blades, arranged parallel, and which act as a deflector of the air that invests them.

4. Micro-wind generation system (100) according to claim 1 wherein said electric generator (130) also comprises a rotation assistance subsystem (133) adapted to provide a rotation torque to the rotor of said electric generator (130).

5. Micro-wind generation system (100) according to claim 4 wherein said rotation assistance subsystem (133) comprises an electromagnet (134) and said wind blades (131), with which said rotating element is provided, have an element (132) in ferromagnetic material positioned in their distal end.

6. Micro-wind generation system (100) according to claim 1 wherein said channeling ducts have section variations in the outlet zone, in order to exploit the Venturi effect to facilitate the escape of air.

7. Micro-wind generation system (100) according to claim 1 wherein at least one of said external surfaces that constitute the element that intercepts the flow of wind (250) is a perimeter wall of the building (200).

8. Micro-wind generation system (100) according to claim 1 wherein at least one of said external surfaces that constitute the element that intercepts the flow of wind (250) is a pitch of the roof of the building (200).

## Patentansprüche

1. Mikrowindsystem zur Stromerzeugung (100), das sich zur Integration in ein Gebäude (200) eignet, dessen Außenfläche mindestens ein Element bildet, das den Windstrom (250) abfängt, wobei es sich um das Mikrowinderzeugungssystem handelt, wobei:
a. die mindestens eine Außenfläche, die das Element bildet, das den Windstrom (250) abfängt, eine Vielzahl von Löchern oder Schlitzen oder allgemein Öffnungen aufweist, durch die der auftreffende Wind (250) eindringen kann, und
b. die Löcher oder Schlitze oder Öffnungen im Allgemeinen bilden den Eingang zu speziellen Kanalisationskanälen, die innen so geformt sind, dass die Luft gezwungen ist, nur in die Eingangsrichtung zu strömen, so dass der Wind (250), der die mindestens eine Außenfläche umströmt, in die Kanäle eintritt, aber im Wesentlichen daran gehindert wird, aus denselben Löchern oder Schlitzen oder Öffnungen im Allgemeinen zu entweichen, die in der mindestens einen Außenfläche vorhanden sind, und wobei die Luft gezwungen ist, aus dem anderen Ende der Kanäle auszutreten; wobei außerdem:
c. mindestens ein rotierendes Element mit Windflügeln (131) am Ausgang dieser Kanäle positioniert ist, und
d. das mindestens eine rotierende Element ist so positioniert, dass die aus den Kanälen austretende Luft die Windflügel (131) umströmt und so das rotierende Element in Rotation versetzt, und
e. das mindestens eine rotierende Element ist Teil eines elektrischen Generators (130), der einen Teil der auf das rotierende Element übertragenen mechanischen Energie, das in Rotation versetzt wird, in elektrische Energie umwandelt; und die mindestens eine Außenfläche, die das Element bildet, das den Windstrom (250) abfängt, ist **dadurch gekennzeichnet, dass** sie umfasst:
i. eine Oberflächenabdeckung (110), auf der sich die Vielzahl von Löchern oder Schlitzen oder allgemein Öffnungen befindet, durch die der Wind (250) eindringen kann, und
ii. eine darunterliegende Oberfläche (120), die mit Rillen geformt ist, die geeignet sind, die Luft, die auf die darunterliegende Oberfläche (120) trifft, entlang einer vorherrschenden Richtung zu leiten und zu verhindern, dass sich die Luft ungleichmäßig in verschiedene Richtungen verteilt.

2. Mikrowinderzeugungssystem (100) gemäß Anspruch 1, wobei die darunterliegende Oberfläche (120) nebeneinanderliegende Rillen aufweist, die die Form der Tesla-Ventilkanäle haben.

3. Mikrowinderzeugungssystem (100) gemäß Anspruch 1, wobei die Oberflächenabdeckung (110) eine Vielzahl von parallel angeordneten Längsflügeln umfasst, die als Abweiser für die Luft, die sie umgibt, wirken.

4. Mikrowinderzeugungssystem (100) gemäß Anspruch 1, wobei der elektrische Generator (130) außerdem ein Rotationsunterstützungssubsystem (133) umfasst, das dazu geeignet ist, dem Rotor des elektrischen Generators (130) ein Rotationsdrehmoment zu verleihen.

5. Mikrowinderzeugungssystem (100) gemäß Anspruch 4, wobei das Rotationsunterstützungssubsystem (133) einen Elektromagneten (134) umfasst und die Windflügel (131), mit denen das rotierende Element versehen ist, ein Element (132) aus ferromagnetischem Material aufweisen, das an ihrem distalen Ende positioniert ist.

6. Mikrowinderzeugungssystem (100) gemäß Anspruch 1, wobei die Kanalisationskanäle Querschnittsvariationen in der Auslasszone aufweisen, um den Venturi-Effekt auszunutzen und das Entweichen von Luft zu erleichtern.

7. Mikrowinderzeugungssystem (100) gemäß Anspruch 1, wobei mindestens eine der Außenflächen, die das Element bilden, das den Windstrom (250) abfängt, eine Außenwand des Gebäudes (200) ist.

8. Mikrowinderzeugungssystem (100) nach Anspruch 1, wobei mindestens eine der Außenflächen, die das den Windstrom (250) abfangende Element bilden, eine Dachneigung des Gebäudes (200) ist.

## Revendications

1. Système de micro-éolienne de production d'électricité (100) apte à être intégré dans un bâtiment (200) dont au moins une de ses surfaces externes constitue l'élément qui intercepte le flux du vent (250), ledit système de micro-éolienne étant **caractérisé en ce que**:
a. ladite au moins une surface externe qui constitue l'élément qui intercepte le flux du vent (250) présente une pluralité de trous, ou fentes, ou ouvertures en général, à travers lesquels le vent (250) qui la frappe peut pénétrer, et
b. lesdits trous, ou lesdites fentes, ou ouvertures en général, constituent l'entrée de conduits de canalisation spéciaux, formés intérieurement de manière à ce que l'air soit forcé de circuler uniquement dans le sens entrant, de sorte que le vent (250) qui investit ladite au moins une surface externe entre dans lesdits conduits, mais il est sensiblement empêché de s'échapper des mêmes trous, ou fentes, ou ouvertures en général, qui sont présents dans ladite au moins une surface externe, et l'air est forcé de sortir par l'autre extrémité desdits conduits; de plus:
c. au moins un élément rotatif avec des pales d'éolienne (131) est positionné à la sortie de ces conduits, et
d. ledit au moins un élément rotatif est positionné de manière à ce que l'air sortant desdits conduits investisse lesdites pales d'éolienne (131) mettant ainsi en rotation ledit élément rotatif, et
e. ledit au moins un élément rotatif fait partie d'un générateur électrique (130) qui transforme une partie de l'énergie mécanique transmise audit élément rotatif, étant mis en rotation, en énergie électrique;
et ladite au moins une surface externe qui constitue l'élément qui intercepte le flux de vent (250) est **caractérisée en ce qu'**elle comprend:
i. un revêtement de surface (110) sur lequel se trouve ladite pluralité de trous, ou fentes, ou ouvertures en général, à travers lesquels le vent (250) peut entrer, et
ii. une surface sous-jacente (120) formée de rainures adaptées pour transporter l'air qui frappe ladite surface sous-jacente (120) selon une direction dominante et pour éviter que l'air ne se disperse indifféremment dans diverses directions.

2. Système de génération de micro-éolienne (100) selon la revendication 1 dans lequel ladite surface sous-jacente (120) présente des rainures côte à côte ayant la forme des conduits de valve Tesla.

3. Système de génération de micro-éolienne (100) selon la revendication 1 dans lequel ledit revêtement de surface (110) comprend une pluralité de pales longitudinales, disposées parallèlement, et qui agissent comme un déflecteur de l'air qui les investit.

4. Système de génération de micro-éolienne (100) selon la revendication 1 dans lequel ledit générateur électrique (130) comprend également un sous-système d'assistance à la rotation (133) adapté pour fournir un couple de rotation au rotor dudit générateur électrique (130) .

5. Système de génération de micro-éolienne (100) selon la revendication 4 dans lequel ledit sous-système d'assistance à la rotation (133) comprend un électroaimant (134) et lesdites pales d'éolienne (131), dont est pourvu ledit élément rotatif, comportent un élément (132) en matériau ferromagnétique positionné dans leur extrémité distale.

6. Système de génération de micro-éolienne (100) selon la revendication 1 dans lequel lesdits conduits de canalisation présentent des variations de section dans la zone de sortie, afin d'exploiter l'effet Venturi pour faciliter l'échappement de l'air.

7. Système de génération de micro-éolienne (100) selon la revendication 1 dans lequel au moins une desdites surfaces externes qui constituent l'élément qui intercepte le flux de vent (250) est un mur périphérique du bâtiment (200).

8. Système de génération de micro-éolienne (100) selon la revendication 1 dans lequel au moins une desdites surfaces externes qui constituent l'élément qui intercepte le flux de vent (250) est une pente du toit du bâtiment (200).
